# EUROPÄISCHE PATENTANMELDUNG

(11) **EP 4 306 202 A1**
(43) Veröffentlichungstag der Anmeldung: **17.01.2024**
(21) Anmeldenummer: 22020328.5
(22) Anmeldetag: 11.07.2022
(51) Int. Cl.: B01D 53/14, B01D 53/22, C10L 3/10

(54) **VERFAHREN UND ANLAGE ZUR BEHANDLUNG EINES GASSTROMES MIT EINER AMINLÖSUNG**

(71) Anmelder: Linde GmbH, 82049 Pullach (DE)
(72) Erfinder: Pleintinger, Stefan, 82049 Pullach (DE); Johannink, Matthias, 82049 Pullach (DE)
(74) Vertreter: Zahn, Christoph

(57) **Zusammenfassung**

Es wird ein Verfahren zur Aminbehandlung eines Gasgemischs (F) mit einem Kohlenwasserstoffanteil und einem Sauergasanteil vorgeschlagen, wobei ein erster Teil des Gasgemischs (F) als erster Einsatzstrom (F1) unter Erhalt eines ersten Folgestroms (S1) und eines zweiten Folgestroms (S2) einer Aminbehandlung (10) unterworfen wird, wobei der erste Folgestrom (F1) einen geringeren Sauergasanteil als der erste Einsatzstrom (F1) aufweist und Wassser enthält, wobei zumindest ein Teil des ersten Folgestroms (S1) unter Erhalt eines dritten Folgestroms (S3) einer Trocknung (20) unterworfen wird, und wobei die Aminbehandlung (10) und die Trocknung (20) unter Einsatz eines erwärmten Energieträgers durchgeführt werden. Hierbei ist vorgesehen, dass ein zweiter Teil des Gasgemischs (F) als zweiter Einsatzstrom (F2) unter Erhalt eines vierten Folgestroms (S4) und eines fünften Folgestroms (S5) einer nichtabsorptiven Trennung (40) unterworfen wird, dass der vierte Folgestrom (S4) einen geringeren Sauergasanteil als der zweite Einsatzstrom (F2) aufweist, dass der fünfte Folgestrom (S5) einen höheren Sauergasanteil als der zweite Einsatzstrom (F2) aufweist, und dass zumindest ein Teil des fünften Folgestroms (S5) zur Bereitstellung und/oder Erwärmung des Energieträgers verwendet wird. Eine entsprechende Anlage (100) ist ebenfalls Gegenstand der vorliegenden Erfindung.

## Beschreibung

Die Erfindung betrifft ein Verfahren und eine Anlage zur Aminbehandlung von sauergashaltigen Gasgemischen, insbesondere von Erdgas.

### Hintergrund

Die Aminbehandlung (engl. Amine Treatment), auch bekannt als Aminwäsche, ist das derzeit überwiegend zur sogenannten Gassüßung (engl. Sweetening) oder Sauergasentfernung im Zuge der Erdgasaufbereitung angewandte Verfahren. Hierbei werden wässrige Lösungen verschiedener Alkylamine, kurz auch als Amine bezeichnet, eingesetzt, um insbesondere Schwefelwasserstoff und Kohlendioxid aus dem Erdgas zu entfernen. Auch eine Behandlung anderer Gasgemische ist durch eine Aminbehandlung möglich, d.h. die vorliegende Erfindung ist nicht auf den Einsatz einer Aminbehandlung bei Erdgas beschränkt.

Eine Alternative zur Aminbehandlung ist die Membrantechnologie. Diese ist jedoch aufgrund der relativ hohen Investitions- und Betriebskosten sowie anderer technischer Faktoren derzeit wirtschaftlich weniger attraktiv.

Bei der Aminbehandlung werden unterschiedliche (Alkyl-)Amine wie beispielsweise Diethanolamin (DEA), Monoethanolamin (MEA), Methyldiethanolamin (MDEA), Diisopropanolamin (DIPA) und Aminoethoxyethanol (Diglycolamin) (DGA) eingesetzt. Die derzeit am häufigsten in Industrieanlagen verwendeten Amine sind die Alkanolamine DEA, MEA und MDEA.

Ein typisches Verfahren zur Aminbehandlung umfasst die Verwendung einer Absorbereinheit und eine Regeneratoreinheit sowie entsprechende Zusatzapparate. In der Absorbereinheit absorbiert eine abwärts fließende Aminlösung die Sauergase Schwefelwasserstoff und Kohlendioxid aus dem aufwärts strömenden Gasgemisch, so dass an deren Kopf ein gesüßter Gasstrom (d.h. ein schwefelwasserstoff- und kohlendioxidarmes Gasgemisch) als Produkt abgezogen werden kann. Im Sumpf der Absorbereinheit fällt eine an den absorbierten Sauergasen reiche Aminlösung an.

Diese wird in der Regeneratoreinheit (einem Stripper mit Reboiler) aufbereitet, um eine regenerierte Aminlösung zu erzeugen, die zur Wiederverwendung zurück in die Absorbereinheit geführt wird. Das gestrippte Kopfgas aus der Regeneratoreinheit weist die Sauergase in aufkonzentrierter Form auf.

Zu weiteren Details entsprechender Verfahren und Anlagen sei auf einschlägige Fachliteratur, beispielsweise Kohl, A.L. und Nielsen, R.B., "Gas Purification", 5. Auflage 1997, Gulf Publishing, Houston, Texas, insbesondere Kapitel 2, "Alkanolamines for Hydrogen Sulfide an Carbon Dioxide Removal", verwiesen.

Das Kopfgas aus der Absorbereinheit weist beispielsweise einen Gehalt an den Sauergasen von nur noch 2% auf. Es ist typischerweise wassergesättigt und wird daher in einer Trocknungseinheit von Wasser befreit. Die Trocknungseinheit kann insbesondere mittels eines Wärmeträgers wie Dampf betrieben werden.

Die vorliegende Erfindung stellt sich die Aufgabe, die Kapazität entsprechender Anlagen in einfacher und kostengünstiger Weise zu erhöhen.

### Offenbarung der Erfindung

Diese Aufgabe wird durch ein Verfahren und eine Anlage zur Aminbehandlung von sauergashaltigen Gasgemischen, insbesondere Erdgas, mit den Merkmalen der jeweiligen unabhängigen Patentansprüche gelöst. Ausgestaltungen sind Gegenstand der abhängigen Patentansprüche und der nachfolgenden Beschreibung.

Fluide, d.h. Flüssigkeiten, Gase, überkritische Fluide, Zweiphasenströme usw., können im hier verwendeten Sprachgebrauch reich oder arm an einer oder mehreren Komponenten sein, wobei "reich" für einen Gehalt von wenigstens 50%, 75%, 90%, 95%, 99%, 99,5%, 99,9% oder 99,99% und "arm" für einen Gehalt von höchstens 50%, 25%, 10%, 5%, 1%, 0,1% oder 0,01% auf Mol-, Gewichts- oder Volumenbasis stehen kann. Der Begriff "überwiegend" kann der Definition von "reich" entsprechen. Fluide können ferner angereichert oder abgereichert an einer oder mehreren Komponenten sein, wobei sich diese Begriffe auf einen Gehalt in einem Ausgangsfluid beziehen, aus dem das Fluid gewonnen wurde. Das Fluid ist "angereichert", wenn dieses zumindest den 1,1-fachen, 1,5-fachen, 2-fachen, 5-fachen, 10-fachen 100-fachen oder 1.000-fachen Gehalt, und "abgereichert", wenn dieses höchstens den 0,9-fachen, 0,5-fachen, 0,1-fachen, 0,01-fachen oder 0,001-fachen Gehalt einer entsprechenden Komponente, bezogen auf das Ausgangsfluid enthält. Der Begriff der "Abreicherung" soll dabei auch eine vollständige Entfernung, d.h. eine "Abreicherung auf null" umfassen. Ist hier beispielsweise von einem "Sauergasstrom" oder "Kohlenwasserstoffstrom" die Rede, sei hierunter auch ein Fluid verstanden, das reich an Sauergasen bzw. Kohlenwasserstoffen ist, jedoch nicht notwendigerweise ausschließlich hieraus bestehen muss.

Die vorliegende Erfindung schlägt ein Verfahren zur Aminbehandlung eines Gasgemischs mit einem Kohlenwasserstoffanteil und einem Sauergasanteil vor. Zum Begriff der "Aminbehandlung" wird dabei ausdrücklich auf die eingangs getroffenen Erläuterungen bzw. das fachmännische Verständnis und die weiteren Ausführungen unten verwiesen. Hierbei wird ein erster Teil des Gasgemischs als erster Einsatzstrom unter Erhalt eines ersten Folgestroms und eines zweiten Folgestroms einer Aminbehandlung unterworfen, wobei der erste Folgestrom einen geringeren Sauergasanteil als der erste Einsatzstrom aufweist und Wassser enthält. Insbesondere kann der erste Folgestrom arm an Sauergasen sein und der zweite Folgestrom reich an solchen im Sinne der soeben getroffenen Definition. Im Rahmen der Erfindung wird ein Teil des ersten Folgestroms unter Erhalt eines dritten Folgestroms einer Trocknung unterworfen, wobei die Aminbehandlung und die Trocknung unter Einsatz eines erwärmten Energieträgers durchgeführt werden.

Erfindungsgemäß ist dabei vorgesehen, dass ein zweiter Teil des Gasgemischs als zweiter Einsatzstrom unter Erhalt eines vierten Folgestroms und eines fünften Folgestroms einer nichtabsorptiven Trennung unterworfen wird, dass der vierte Folgestrom einen geringeren Sauergasanteil als der zweite Einsatzstrom aufweist, dass der fünfte Folgestrom einen höheren Sauergasanteil als der zweite Einsatzstrom aufweist, und dass zumindest ein Teil des fünften Folgestroms zur Bereitstellung und/oder Erwärmung des Energieträgers verwendet wird.

Die vorliegende Erfindung löst die zuvor angegebene Aufgabe, eine einfache und kostengünstige Kapazitätserhöhung einer enstprechenden Anlage zu ermöglichen. Eine derartige Kapazitätserhöhung ist herkömmlicherweise mit hohen Kosten verbunden, da sie den Austausch von Trennkolonnen erfordert. Zudem greifen entsprechende Maßnahmen herkömmlicherweise massiv in die Anlage bzw. den Prozess ein und führen zu entsprechender Downtime.

Die durch die Erfindung bereitgestellte Lösung umfasst insbesondere, den zur Bereitstellung der erforderlichen Wärme für Aminbehandlung (bzw. deren Regeneration) und Trocknung herkömmlicherweise verwendeten Anteil des Einsatzes durch ein minderwertiges Produkt aus der nichtabsorptiven Trennung zu ersetzen, beispielsweise ein Permeat einer Membrantrenneinheit. Auf diese Weise kann eine entsprechende Einsatzmenge direkt in ein Produkt überführt werden.

In einer Ausgestaltung der Erfindung werden der erste Einsatzstrom und der zweite Einsatzstrom in einer Gesamtmenge bereitgestellt, wobei der zweite Einsatzstrom eine Teilmenge von bis zu 25%, bis zu 20% oder bis zu 10% und der erste Einsatzstrom den Rest der Gesamtmenge aus erstem und zweitem Einsatzstrom umfasst. Die erste Teilmenge richtet sich dabei insbesondere nach der Ausgestaltung der nichtabsorptiven Trenneinheit, beispielsweise der Membrangröße in einer Membrantrenneinheit. Die Selektivität einer entsprechenden Membran ist dabei ein entscheidendes Kriterium bei der zu erzielenden zweiten Teilmenge, die direkt der Kapazitätserhöhung entspricht. Das Permeat, das zur Wärmegewinnung verfeuert wird, darf dabei keinen übermäßig hohen Kohlendioxidgehalt aufweisen, um eine sichere Verbrennung zu ermöglichen.

Wie bereits erwähnt, kann die nichtabsorptive Trennung eine adsorptive Trennung, beispielsweise eine Druckwechseladsorption und/oder eine Membrantrennung umfassen oder darstellen. Allgemein ist eine Trennung "nichtabsorptiv", wenn sie ohne ein flüssiges Medium betrieben wird, in das Komponenten des zu trennenden Gasgemischs durch chemische Bindung oder physikalische Affinitäten übergehen. Eine Membrantrennung kann insbesondere die Verwendung von Membranen umfassen, wie sie in der WO 2021/032319 A1 der Anmelderin genannt sind, beispielsweise glasartige Membranen. Sie kann insbesondere zu den zuvor erwähnten hohen Anteilen der zweiten Teilmenge führen, ohne zusätzliche Kosten zu verursachen und wesentlich in den Prozess der Aminbehandlung einzugreifen. Eine Druckwechseladsorption kann für Einsätze mit hohen Gehalten an höheren Kohlenwasserstoffen, beispielsweise 50 bis 100%, zum Einsatz kommen, wobei insbesondere (lediglich) zu beachten ist, dass der Kohlenwaserstoff mit der größten Kettenlänge bei den verwendeten Bedingungen (Druck, Temperatur) nicht kondensiert. Auch Kombinationen aus Membrantrennung und Druckwechseladsorption sind möglich.

Im Rahmen der Erfindung kann also vorgesehen sein, dass die nichtabsorptive Trennung eine Membrantrennung ist oder umfasst und der vierte Folgestrom als Retenttatstrom der Membrantrennung und der fünfte Folgestrom als Permeatstrom der Membrantrennung gebildet werden.

In Ausgestaltungen der Erfindung, kann der Energieträger aus Dampf und einem Heißöl ausgewählt sein, wobei sich jeweils spezifische Vorteile erzielen lassen.

In einer Ausgestaltung der Erfindung kann zumindest ein Teil des fünften Folgestroms zur Bereitstellung einer Gesamtwärmemenge verwendet werden, wobei ein erster Teil der Gesamtwärmemenge in der Aminbehandlung und der Trocknung und ein zweiter Teil der Gesamtwärmemenge zur Erzeugung elektrischer Energie verwendet wird. Auf diese Weise kann, beispielsweise bei niedrigerem Wärmebedarf in der Aminbehandlung und Trocknung, ein entsprechend anfallender Strom genutzt werden.

In einer Ausgestaltung der Erfindung wird die elektrische Energie dabei unter Verwendung eines Gasmotors oder einer Gasturbine erzeugt.

In Ausgestaltungen der Erfindung kann ein oder der Kohlenwasserstoffanteil
- des ersten Einsatzstroms 20 bis 95%,
- des zweiten Einsatzstroms 20 bis 95%,
- des ersten Folgestroms 80 bis 99.9999%,
- des zweiten Folgestroms 1 bis 30%,
- des dritten Folgestroms 80 bis 99.9999%,
- des vierten Folgestroms 50 bis 99% und/oder
- des fünften Folgestroms 20 bis 50%
auf molarer, Massen- oder Volumenbasis betragen. Eine maximal erreichbare Reinheit des ersten Folgestroms kann beispielsweise bei wenigen Volumen-ppm an Kohlendioxid liegen.

Entsprechend kann ein oder der Sauergasanteil
- des ersten Einsatzstroms 5 bis 80%,
- des zweiten Einsatzstroms 5 bis 80%,
- des ersten Folgestroms 0.0001 bis 20%,
- des zweiten Folgestroms 70 bis 99%,
- des dritten Folgestroms 0.0001 bis 20%,
- des vierten Folgestroms 1 bis 50% und/oder
- des fünften Folgestroms 80 bis 50%
auf molarer, Massen- oder Volumenbasis betragen.

Der Kohlenwasserstoffanteil des ersten und zweiten Einsatzstroms kann insbesondere zu mehr als 90% durch Methan und Ethan gebildet sein, und der Sauergasanteil entsprechend zu mehr als 90% durch Kohlendioxid und Schwelfelwasserstoff.

Wie bereits erwähnt, kann die vorliegende Erfindung im Zusammenhang mit an sich bekannten Aminbehandlungen zum Einsatz kommen, d.h. der der erste Einsatzstrom kann in der Aminbehandlung in einer Absorptionskolonne einer wässrigen Lösung eines oder mehrerer Alkylamine entgegengeschickt werden, wobei sich im Sumpf der Absorptionskolonne eine mit Sauergas(en) angereicherte Flüssigkeit abscheidet. Diese bzw. die wässrige Lösung des oder der Amine kann in einer Stripkolonne regeneriert werden, in deren Sumpf sich die regenerierte Aminlösung abscheidet. Hierbei kann der erste Folgestrom vom Kopf der Waschkolonne und der zweite Folgestrom vom Kopf der Stripkolonne abgezogen werden.

Eine Anlage zur Aminbehandlung eines Gasgemischs mit einem Kohlenwasserstoffanteil und einem Sauergasanteil ist ebenfalls Gegenstand der vorliegenden Erfindung, wobei die Anlage eine Aminbehandlungseinheit aufweist und dafür einegerichtet ist, einen ersten Teil des Gasgemischs als ersten Einsatzstrom unter Erhalt eines ersten Folgestroms und eines zweiten Folgestroms in der Aminbehandlungseinheit zu bearbeiten, wobei der erste Folgestrom einen geringeren Sauergasanteil als der erste Einsatzstrom aufweist und Wasser enthält, wobei die Anlage eine Trocknungseinheit aufweist und dafür eingerichtet ist, zumindest einen Teil des ersten Folgestroms unter Erhalt eines dritten Folgestroms in der Trocknungseinheit zu bearbeiten, und wobei die Anlage dafür eingerichtet ist, die Aminbehandlungseinheit und die Trocknungseinheit unter Einsatz eines erwärmten Energieträgers zu betreiben.

Es ist vorgesehen, dass die Anlage eine nichtabsorptive Trenneinheit aufweist und dafür eingerichtet ist, einen zweiten Teil des Gasgemischs als zweiten Einsatzstrom unter Erhalt eines vierten Folgestroms und eines fünften Folgestroms in der nichtabsorptiven Trenneinheit zu bearbeiten, dass der vierte Folgestrom einen geringeren Sauergasanteil als der zweite Einsatzstrom aufweist, dass der fünfte Folgestrom einen höheren Sauergasanteil als der zweite Einsatzstrom aufweist, und dass die Anlage dafür eingerichtet ist, zumindest einen Teil des fünften Folgestroms zur Bereitstellung und/oder Erwärmung des Energieträgers zu verwenden.

Zu Merkmalen und Vorteilen der erfindungsgemäß vorgeschlagenen Anlage sei ausdrücklich auf die obigen Erläuterungen bezüglich des erfindungsgemäßen Verfahrens und seiner Ausgestaltungen verwiesen. Dies gilt auch für eine Anlage gemäß einer besonders bevorzugten Ausführungsform der vorliegenden Erfindung, die zur Durchführung eines Verfahrens eingerichtet ist, wie es zuvor in seinen Ausgestaltungen erläutert wurde.

Die Erfindung wird nachfolgend unter Bezugnahme auf die beigefügten Zeichnungen, welche bevorzugte Ausgestaltungen der vorliegenden Erfindung gegenüber dem Stand der Technik veranschaulichen, näher erläutert.

### Figurenbeschreibung

Figur 1 zeigt eine Anlage zur Aminbehandlung, die Ausgestaltungen der vorliegenden Erfindung zugrunde liegen kann, in vereinfachter schematischer Darstellung.
Figur 2 zeigt eine Anlage zur Aminbehandlung gemäß einer Ausgestaltung der vorliegenden Erfindung in vereinfachter schematischer Darstellung.

### Ausführungsformen der Erfindung

In den nachfolgenden Figuren sind unterschiedliche Anlagen zur Aminbehandlung schematisch veranschaulicht, wobei für gleiche oder vergleichbare Komponenten die identischen Bezugszeichen verwendet werden und diese nicht wiederholt erläutert werden. Wird nachfolgend auf Anlagenkomponenten (z.B. "Aminbehandlungseinheit") Bezug genommen, gelten die diesbezüglichen Erläuterungen und Bezugszeichen für Verfahrensschritte (z.B. "Aminbehandlung") in gleicher Weise. Entsprechendes gilt umgekehrt für eine Bezugnahme auf Verfahrensschritte.

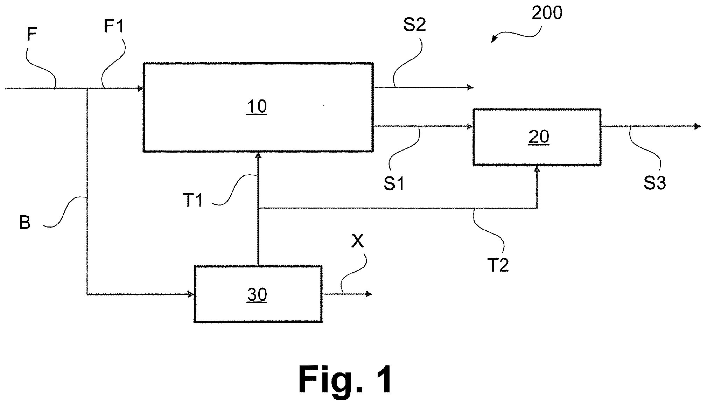

In Figur 1 ist eine Anlage zur Aminbehandlung, die Ausgestaltungen der vorliegenden Erfindung zugrunde liegen kann, die aber nicht gemäß einer Ausführungsform der Erfindung ausgebildet ist, in Form eines vereinfachten, schematischen Anlagendiagramms veranschaulicht und insgesamt mit 200 bezeichnet.

Der Anlage 200, die eine Aminbehandlungseinheit 10, eine Trocknereinheit 20 und eine Dampferzeugungseinheit 30 aufweist, wird ein Gasgemisch F, das einen oder mehrere Kohlenwasserstoffe und eines oder mehrere Sauergase enthält, d.h. einen Kohlenwasserstoffanteil und einen Sauergasanteil aufweist, beispielsweise Erdgas, zugeführt. Von dem Gasgemisch F kann beispielsweise ein Anteil von 97 bis 99% als Einsatzstrom F1 mit derselben Zusammensetzung wie das Gasgemisch F in die Aminbehandlungseinheit 10 geführt und dort in der eingangs erläuterten Weise behandelt, d.h. zumindest teilweise von dem/den Sauergas(en) befreit werden.

Aus der Aminbehandlungseinheit 10, die eine Absorbereinheit und eine Regeneratoreinheit aufweisen kann, welche hier nur aus Übersichtlichkeitsgründen nicht gezeigt sind, kann daher ein gegenüber dem Einsatzstrom F1 an dem einen oder den mehreren Sauergasen abgereicherter und zumindest einen Teil des einen oder der mehreren Kohlenwasserstoffe des Einsatzstroms F1 sowie Wasser enthaltender Gasstrom S1, hier als erster Folgestrom bezeichnet, entnommen werden. Der erste Folgestrom S1 weist insbesondere einen geringeren Sauergasanteil als der Einsatzstrom F1 und weiter insbesondere zumindest einen überwiegenden Anteil von dessen Kohlenwasserstoffen auf.

Ferner kann aus der Aminbehandlungseinheit 10 ein gegenüber dem Einsatzstrom F1 an dem einen oder den mehreren Sauergasen angereicherter und an dem einen oder mehreren Kohlenwasserstoffen armer Sauergasstrom S2 entnommen werden, der hier auch als zweiter Folgestrom bezeichnet wird. Der zweite Folgestrom S2 weist einen höheren Sauergasanteil als der Einsatzstrom F1 und insbesondere nur einen geringen Anteil von Kohlenwasserstoffen aus diesem auf.

Der erste Folgestrom S1 wird zur Trocknung in die Trocknereinheit 20 geführt und in dieser unter Erhalt eines gegenüber dem ersten Folgestrom S1 an Wasser abgereicherten und zumindest einen Teil des einen oder der mehreren Kohlenwasserstoffe des ersten Folgestroms enthaltenden Gasstroms S3, der hier als dritter Folgestrom bezeichnet wird, getrocknet. Der dritte Folgestrom S3 wird als Produktstrom aus der Anlage 200 ausgeführt. Erweist insbesondere im Wesentlichen ausschließlich Kohlenwasserstoffe aus dem Einsatzstrom F1 auf und ist arm an oder frei von Sauergasen und von Wasser.

Die Aminbehandlungseinheit 10 bzw. deren nicht veranschaulichte Regeneratoreinheit und die Trocknereinheit 20 werden mittels thermischer Energie betrieben, die diesen Einheiten mittels der Dampferzeugungseinheit 30 produzierter Dampfströme T1 und T2 oder anderer Ströme eines Wärmeenergieträgers zugeführt wird. Der Dampferzeugungseinheit 30 wird dabei ein Anteil von beispielsweise 1 bis 3% des Gasgemischs F als Brenngasstrom B zugeführt. Ein Abgasstrom X wird aus der Dampferzeugungseinheit 30 ausgeführt.

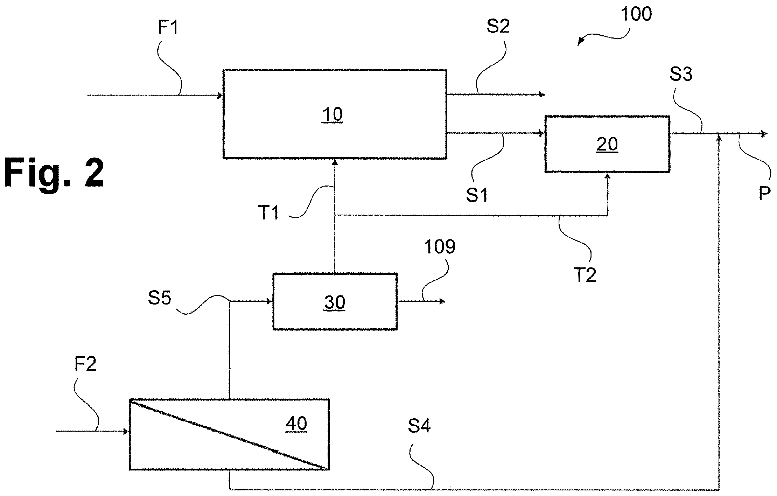

In Figur 2 ist eine Anlage zur Aminbehandlung gemäß einer Ausgestaltung der vorliegenden Erfindung in Form eines vereinfachten, schematischen Anlagendiagramms veranschaulicht und insgesamt mit 100 bezeichnet.

Die Anlage 100 unterscheidet sich von der Anlage 200 unter anderem durch eine Membrantrenneinheit 40. Wie erwähnt, kann anstelle einer Membrantrenneinheit auch beispielsweise eine adsorptive Trenneinheit, beispielsweise zur Druckwechseladsorption, eingesetzt werden. Der Brenngasstrom B kommt in Wegfall. Stattdessen wird der Einsatzstrom F1 hier nur durch beispielsweise etwa 80% des (hier nicht veranschaulichten) Gasgemischs F, also einen ersten Anteil dieses Gasgemischs, gebildet. Der besseren Unterscheidbarkeit halber wird dieser Einsatzstrom F1 hier als ein erster Einsatzstrom bezeichnet.

Ein zweiter Anteil des Gasgemischs F, beispielsweise etwa 20% des Gasgemischs F, wird in Form eines zweiten Einsatzstroms F2 in die Membrantrenneinheit 40 geführt. Der Membrantrenneinheit 40 werden ein Retentatstrom S4 und ein Permeatstrom S5 entnommen, die hier auch als vierter Folgestrom und fünfter Folgestrom bezeichnet werden, wobei der fünfte Folgestrom S5 anstelle des Brenngasstroms B in der Anlage 90 in der Dampferzeugungseinheit 30 verfeuert wird und der vierte Folgestrom S4 mit dem dritten Folgestrom S3 aus der Trocknereinheit 20 zu einem Produktstrom P vereinigt wird, der aus der Anlage 100 ausgeführt wird.

## Patentansprüche

1. Verfahren zur Aminbehandlung eines Gasgemischs (F) mit einem Kohlenwasserstoffanteil und einem Sauergasanteil, wobei ein erster Teil des Gasgemischs (F) als erster Einsatzstrom (F1) unter Erhalt eines ersten Folgestroms (S1) und eines zweiten Folgestroms (S2) einer Aminbehandlung (10) unterworfen wird, wobei der erste Folgestrom (F1) einen geringeren Sauergasanteil als der erste Einsatzstrom (F1) aufweist und Wassser enthält, wobei zumindest ein Teil des ersten Folgestroms (S1) unter Erhalt eines dritten Folgestroms (S3) einer Trocknung (20) unterworfen wird, und wobei die Aminbehandlung (10) und die Trocknung (20) unter Einsatz eines erwärmten Energieträgers durchgeführt werden, **dadurch gekennzeichnet, dass** ein zweiter Teil des Gasgemischs (F) als zweiter Einsatzstrom (F2) unter Erhalt eines vierten Folgestroms (F4) und eines fünften Folgestroms (F5) einer nichtabsorptiven Trennung (40) unterworfen wird, dass der vierte Folgestrom (F4) einen geringeren Sauergasanteil als der zweite Einsatzstrom (F2) aufweist, dass der fünfte Folgestrom (S5) einen höheren Sauergasanteil als der zweite Einsatzstrom (F2) aufweist, und dass zumindest ein Teil des fünften Folgestroms (S5) zur Bereitstellung und/oder Erwärmung des Energieträgers verwendet wird.

2. Verfahren nach Anspruch 1, bei dem der erste Einsatzstrom (F1) und der zweite Einsatzstrom (F2) in einer Gesamtmenge bereitgestellt werden, wobei der zweite Einsatzstrom (F2) eine Teilmenge von bis zu 25% und der erste Einsatzstrom (F1) den Rest der Gesamtmenge umfasst.

3. Verfahren nach Anspruch 1 oder 2, bei dem der die nichtabsorptive Trennung (40) eine adsorptive Trennung oder/oder eine Membrantrennung ist oder umfasst.

4. Verfahren nach Anspruch 3, bei dem die nichtabsorptive Trennung (40) eine Membrantrennung ist oder umfasst und vierte Folgestrom (S4) als Retenttatstrom der Membrantrennung und der fünfte Folgestrom (S5) als Permeatstrom der Membrantrennung gebildet werden.

5. Verfahren nach einem der vorstehenden Ansprüche, bei dem der Energieträger aus Dampf und einem Heißöl ausgewählt ist.

6. Verfahren nach einem der vorstehenden Ansprüche, bei dem zumindest ein Teil des fünften Folgestroms (S5) zur Bereitstellung einer Gesamtwärmemenge verwendet wird, wobei ein erster Teil der Gesamtwärmemenge in der Aminbehandlung (10) und der Trocknung (20) und ein zweiter Teil der Gesamtwärmemenge zur Erzeugung elektrischer Energie verwendet wird.

7. Verfahren nach Ansurch 6, bei dem die elektrische Energie unter Verwendung eines Gasmotors oder einer Gasturbine erzeugt wird.

8. Verfahren nach einem der vorstehenden Ansprüche, bei dem ein oder der Kohlenwasserstoffanteil
- des ersten Einsatzstroms (F1) 20 bis 95%,
- des zweiten Einsatzstroms (F2) 20 bis 95%,
- des ersten Folgestroms (S1) 80 bis 99.9999%,
- des zweiten Folgestroms (S2) 1 bis 30%,
- des dritten Folgestroms (S3) 80 bis 99.9999%,
- des vierten Folgestroms (S4) 50 bis 99% und/oder
- des fünften Folgestroms (S5) 20 bis 50%
auf molarer, Massen- oder Volumenbasis beträgt.

9. Verfahren nach einem der vorstehenden Ansprüche, bei dem ein oder der Sauergasanteil
- des ersten Einsatzstroms (F1) 5 bis 80%,
- des zweiten Einsatzstroms (F2) 5 bis 80%,
- des ersten Folgestroms (S1) 0.0001 bis 20%,
- des zweiten Folgestroms (S2) 70 bis 99%,
- des dritten Folgestroms (S3) 0.0001 bis 20%,
- des vierten Folgestroms (S4) 1 bis 50% und/oder
- des fünften Folgestroms (S5) 80 bis 50%
auf molarer, Massen- oder Volumenbasis beträgt.

10. Verfahren nach einem der vorstehenden Ansprüche, bei dem der Kohlenwasserstoffanteil des ersten und zweiten Einsatzstroms (F1, F2) zu mehr als 90% durch Methan und Ethan gebildet wird.

11. Verfahren nach einem der vorstehenden Ansprüche, bei dem der Sauergasanteil des ersten und zweiten Einsatzstroms (F1, F2) zu mehr als 90% durch Kohlendioxid und Schwelfelwasserstoff gebildet wird.

12. Verfahren nach einem der vorstehenden Ansprüche, bei dem der erste Einsatzstrom (F1) in der Aminbehandlung (10) in einer Absorptionskolonne einer wässrigen Lösung eines oder mehrerer Alkylamine entgegengeschickt wird und wobei die Lösung in einer Stripkolonne regeneriert wird, wobei der erste Folgestrom (S1) vom Kopf der Waschkolonne und der zweite Folgestrom vom Kopf der Stripkolonne abgezogen wird.

13. Anlage (100) zur Aminbehandlung eines Gasgemischs (F) mit einem Kohlenwasserstoffanteil und einem Sauergasanteil, wobei die Anlage (100) eine Aminbehandlungseinheit (10) aufweist und dafür einegerichtet ist, einen ersten Teil des Gasgemischs (F) als ersten Einsatzstrom (F1) unter Erhalt eines ersten Folgestroms (S1) und eines zweiten Folgestroms (S2) in der Aminbehandlungseinheit (10) zu bearbeiten, wobei der erste Folgestrom (F1) einen geringeren Sauergasanteil als der erste Einsatzstrom (F1) aufweist und Wassser enthält, wobei die Anlage (100) eine Trocknungseinheit (20) aufweist und dafür eingerichtet ist, zumindest einen Teil des ersten Folgestroms (S1) unter Erhalt eines dritten Folgestroms (S3) in der Trocknungseinheit (20) zu bearbeiten, und wobei die Anlage (100) dafür eingerichtet ist, die Aminbehandlungseinheit (10) und die Trocknungseinheit (20) unter Einsatz eines erwärmten Energieträgers zu betreiben, **dadurch gekennzeichnet, dass** die Anlage eine nichtabsorptive Trenneinheit (40) aufweist und dafür eingerichtet ist, einen zweiten Teil des Gasgemischs (F) als zweiten Einsatzstrom (F2) unter Erhalt eines vierten Folgestroms (S4) und eines fünften Folgestroms (S5) in der nichtabsorptiven Trenneinheit (40) zu bearbeiten, dass der vierte Folgestrom (S4) einen geringeren Sauergasanteil als der zweite Einsatzstrom (F2) aufweist, dass der fünfte Folgestrom (S5) einen höheren Sauergasanteil als der zweite Einsatzstrom (F2) aufweist, und dass die Anlage (100) dafür eingerichtet ist, zumindest einen Teil des fünften Folgestroms (S5) zur Bereitstellung und/oder Erwärmung des Energieträgers zu verwenden.

14. Anlage (100) nach Anspruch 13, die zur Durchführung eines Verfahrens nach einem der vorstehenden Ansprüche eingerichtet ist.
